# EUROPEAN PATENT SPECIFICATION

(11) **EP 3 419 801 B1**
(45) Date of publication and mention of the grant of the patent: **17.08.2022**
(21) Application number: 17707505.8
(22) Date of filing: 22.02.2017
(51) Int. Cl.: B29B 15/12, B29C 70/52

(54) **METHOD OF PRODUCING COMPOSITE MATERIAL OF PULTRUSION**
VERFAHREN ZUR HERSTELLUNG EINES VERBUNDWERKSTOFFES DURCH PULTRUSION
PROCÉDÉ DE PRODUCTION D'UN MATÉRIAU COMPOSITE DE PULTRUSION

(30) Priority: 25.02.2016 CN 201610123684
(43) Date of publication of application: 02.01.2019
(73) Proprietor: Covestro Intellectual Property GmbH & Co. KG, 51373 Leverkusen (DE)
(72) Inventor: CHEN, James, Shanghai Shanghai 200241 (CN); LI, Zhijiang, Pudong District Shanghai 201210 (CN)
(74) Representative: Levpat
(86) International application number: PCT/EP2017/054064
(87) International publication number: WO 2017/144532

(56) References cited:
- EP-A1- 0 712 716
- EP-A1- 2 405 047
- EP-A2- 0 747 204
- WO-A1-98/58785
- WO-A1-2010/048688
- WO-A1-2011/131664
- WO-A1-2012/139582
- WO-A1-2014/053590
- WO-A1-2014/084755
- WO-A1-2015/091825
- WO-A2-2012/103929
- CA-A1- 2 540 747
- DE-A1-102012 007 439
- FR-A1- 2 541 629
- GB-A- 1 120 041
- US-A- 5 073 413
- US-A1- 2011 014 467
- CAMPBELL F C ED - CAMPBELL FLAKE C: "Manufacturing processes for advanced composites, Pultrusion", 1 January 2004 (2004-01-01), MANUFACTURING PROCESSES FOR ADVANCED COMPOSITES, ELSEVIER ADVANCED TECHNOLOGY, OXFORD, GB, PAGE(S) 432 - 437, XP002640655, ISBN: 978-1-85617-415-2 figure 26

## Description

### Technical Field

The present invention relates to a fiber-impregnating system for producing a fiber-reinforced composite material; to be specific, the present invention concerns a fiber-impregnating system for producing a polyurethane fiber-reinforced composite material. Moreover, the present invention also relates to a pultrusion device with said fiber-impregnating system, and a method of producing a composite material of pultrusion by said pultrusion device.

### Background Art

The conventional pultrusion techniques are mainly about an open impregnating mode, i.e., fibers or textiles or felts pass an impregnating groove with a compression roller or a compression rod, and fibers with resin, after being compressed by pre-formed plates step by step, will enter a heated mold and be cured. However, the employment of the conventional open impregnating modes contains a series of problems, e.g., a high concentration of volatile organic compounds (VOC), a relatively high waste rate of resin and a high rate of pores in a finished product. Moreover, a resin system of a short gelation time is not applicable to this technique.

On the basis of open impregnating mode, two closed infusion techniques are developed. One is the low pressure mode: an infusion box whose internal mold cavity includes one or more relatively large tapers is usually applicable to the pultrusion products purely made of unidirectional fiber yarn; since the taper necessary is too big, the pre-forming of textiles or felts will be hard to fulfill through such infusion boxes, and it will be difficult to use infusion boxes of this type to make pultrusion products with felts or textiles. The other one is the high pressure mode: an infusion box of this type is said to have addressed the technical problem of textiles/felts pre-forming; whereas it is not suitable for the production of pultrusion products purely made of unidirectional fiber yarn mainly due to a relatively high infusion pressure, wherein the gaps between all the unidirectional fiber yarn would easily cause a decompression that would further lead to a resin leak. However, in a practical production of pultrusion products, product of the same shape, due to their different stress conditions, will have different requirements of fiber laminate structure, i.e., fibers with felts may be used to make a product in some conditions, while a product will be made of pure unidirectional fiber according to requirements in some other condition. With respect to the requirements as such, low pressure and high pressure infusion boxes would both be prepared at one time, which increases the cost to some extent and is not helpful for production management.

WO2012/139582 discloses the use of a pultrusion device which is provided with a fiber-impregnating system comprising: an infusion box provided with a mold cavity that has an infusion cavity for fibers to pass, an infusion hole for resin infusion, a resin passage for communicating with the infusion cavity and the infusion hole, and includes a mold downstream off the infusion box.

Therefore, one skilled in the art seeks to develop a fiber-impregnating system capable of increasing and stably maintaining the resin infusion pressure in an infusion box so as to enable a fast and complete impregnation of fibers, which is applicable to the production of a composite material of pultrusion formed by felts/textiles and pure unidirectional yarn.

### Summary

In this view, the present invention, in the first aspect, provides a fiber impregnating system, comprising: an infusion box provided with a mold cavity that has an infusion cavity for fibers to pass, an infusion hole for resin infusion, and a resin passage for communicating with the infusion cavity and the infusion hole, the mold cavity further includes a compression segment upstream of the infusion cavity, the compression segment having an entrance with a depth greater than or equal to a depth of its exit, the depth of the entrance and exit of the compression segment ranging from 0 to 2 mm.

According to one advantageous embodiment of the fiber impregnating system of the invention, the mold cavity further includes a tapering segment upstream of the compression segment, and an entrance of the tapering segment has a depth greater than that of its exit, wherein the ratio between cross section areas of the entrance and exit of the compression segment is lower than or equal to the ratio between cross section areas of the entrance and exit of the tapering segment.

According to another advantageous embodiment of the fiber impregnating system of the invention, the compression segment has a length ranging from 5 mm to 400 mm.

According to another advantageous embodiment of the fiber impregnating system of the invention, the depth of the entrance of the tapering segment ranges from 0.05 mm to 3 mm, and the depth of an end of the tapering segment ranges from 0-2 mm, and the length of the tapering segment ranges from 20 mm-400 mm.

According to another advantageous embodiment of the fiber impregnating system of the invention, the tapering segment tapers along a longitudinal section in a passing direction of the fibers.

According to another advantageous embodiment of the fiber impregnating system of the invention, the fiber-impregnating system further includes an impregnation-assisting segment downstream of the infusion cavity, the impregnation-assisting segment having a length ranging from 5 mm to 100 mm.

According to another advantageous embodiment of the fiber impregnating system of the invention, the depth of an exit of the impregnation-assisting segment ranges from 0-4 mm, and the depth of an entrance of the impregnation-assisting segment is greater than or equal to that of its exit.

According to another advantageous embodiment of the fiber impregnating system of the invention, the longitudinal section of the impregnation-assisting segment is tapered or rectangular in the passing direction of the fibers.

According to another advantageous embodiment of the fiber impregnating system of the invention, the infusion cavity has a depth tapering from a part in communication with the resin passage, along circumference of the infusion cavity, to two sides.

According to another advantageous embodiment of the fiber impregnating system of the invention, a central axis of the resin passage is not 90 degrees relative to the passing direction of the fibers.

According to another advantageous embodiment of the fiber impregnating system of the invention, a longitudinal section of the infusion cavity in the passing direction of the fibers is tapered, semicircular, water drop shaped, rectangular, trapezoidal, rhombic or a combination of them.

According to another advantageous embodiment of the fiber impregnating system of the invention, the infusion cavity has a length ranging from 2 mm to 100 mm.

According to another advantageous embodiment of the fiber impregnating system of the invention, the depth of the infusion cavity ranges from 0.4 mm to 40 mm.

In the second aspect, the present invention provides a fiber-impregnating system, comprising: an infusion box provided with a mold cavity that has an infusion cavity for fibers to pass, an infusion hole for resin infusion, resin flow channels communicating with the infusion cavity to distribute resin evenly, and a resin passage for communicating with the infusion hole and the resin flow channels.

According to another advantageous embodiment of the fiber impregnating system of the invention, the resin flow channels are grooves arranged within the mold cavity, and have a width ranging from 2 mm to 30 mm and a depth ranging from 1 mm to 30 mm.

According to another advantageous embodiment of the fiber impregnating system of the invention, the cross section of the resin flow channel is shaped as a rectangle, a trapezoid, a semicircle or a combination of them.

According to another advantageous embodiment of the fiber impregnating system of the invention, the resin flow channel is a loop formed upon a circumference of the mold cavity.

According to another advantageous embodiment of the fiber impregnating system of the invention, communicating part of the resin passage and the resin flow channel are respectively positioned at the top or bottom of the resin passage upon a circumference of the mold cavity.

According to another advantageous embodiment of the fiber impregnating system of the invention, a shunting device is provided at a communicating part of the resin passage and the resin flow channel.

According to another advantageous embodiment of the fiber impregnating system of the invention, the resin flow channel has a depth decreasing from a part where the resin passage communicates with the resin flow channel to two sides, along circumference of the mold cavity.

According to another advantageous embodiment of the fiber impregnating system of the invention, the projection of a central axis of the resin flow channel is perpendicular to the passing direction of the fibers.

According to another advantageous embodiment of the fiber impregnating system of the invention, there are at least two resin flow channels that are parallel to each other and communicating with each other by a gap having a width ranging 0.5 mm to 200 mm and a depth ranging from 0.5 mm to 10 mm.

According to another advantageous embodiment of the fiber impregnating system of the invention, the gap is configured to be a loop formed along the resin flow channel.

According to another advantageous embodiment of the fiber impregnating system of the invention, the resin flow channel communicates with the infusion cavity by a gap having a width ranging from 0.5 mm to 200 mm and a depth ranging from 0.5 mm to 10 mm.

According to another advantageous embodiment of the fiber impregnating system of the invention, the infusion box includes a plurality of detachable modules having internal cavities connected to one another front and rear to form the mold cavity with the infusion cavity.

According to another advantageous embodiment of the fiber impregnating system of the invention, the infusion box includes a first module and a second module arranged front and rear in the passing direction of fibers, wherein the mold cavity further includes a compression segment upstream of the infusion cavity, the compression segment having an entrance with a depth greater than or equal to a depth of its exit, and the depth of the entrance and exit of the compression segment ranging from 0 to 2 mm; and, the whole or a part of the compression segment is positioned inside the first module, and the whole or a part of the infusion cavity is positioned inside the second module.

According to another advantageous embodiment of the fiber impregnating system of the invention, the resin flow channel and the infusion cavity are communicated by a gap at a joint part of the first and second modules in the passing direction of the fibers, the gap having a width ranging from 0.5 mm to 100 mm and a depth ranging from 0.5 mm to 50 mm.

According to another advantageous embodiment of the fiber impregnating system of the invention, the resin flow channel is formed by a gap between an outer surface of the first module and an internal surface of a cavity of the second module.

According to another advantageous embodiment of the fiber impregnating system of the invention, the resin flow channel is a circumferential loop around the cavity of the second module.

According to another advantageous embodiment of the fiber impregnating system of the invention, the infusion hole is positioned upon the second module, and communicates with the resin flow channel by the resin passage.

According to another advantageous embodiment of the fiber impregnating system of the invention, the fiber-impregnating system further includes an impregnation-assisting segment downstream of the infusion cavity, the impregnation-assisting segment having a length ranging from 5 mm to 100 mm with an exit having a depth ranging from 0 to 4 mm; the depth of an entrance of the impregnation-assisting segment is greater than or equal to that of its exit, and a longitudinal section of the impregnation-assisting segment in the passing direction of the fibers is tapered or rectangular.

According to another advantageous embodiment of the fiber impregnating system of the invention, a longitudinal section of the infusion cavity in the passing direction of the fibers is tapered, semicircular, water drop shaped, rectangular, trapezoidal, rhombic or a combination of them, and the infusion cavity having a length ranging from 2 mm to 100 mm and a depth ranging from 0.4 mm to 40 mm.

In the third aspect, the present invention further provides a pultrusion device, which is provided with above said fiber-impregnating system, and includes a mold downstream of the infusion box.

According to one advantageous embodiment of the pultrusion device of the invention, the infusion box is connected and secured with the mold via a positioning device so as to make a mold cavity of the infusion box and a mold cavity of the mold concentric.

According to another advantageous embodiment of the pultrusion device of the invention, the positioning device is a positioning pin, a concave-and-convex table or a chute.

According to another advantageous embodiment of the pultrusion device of the invention, the infusion box and the mold are tightly locked via a quick lock such that the infusion box can be detached from the mold quickly.

According to another advantageous embodiment of the pultrusion device of the invention, the whole or a part of the infusion box is integrated with the mold.

According to another advantageous embodiment of the pultrusion device of the invention, the part including the impregnation-assisting segment within the infusion box is integrated with the mold.

According to another advantageous embodiment of the pultrusion device of the invention, the whole or a part including the infusion cavity within the infusion box is integrated with the mold.

In the fourth aspect, the present invention further provides a producing method of a composite material of pultrusion, the composite material of pultrusion is produced by the above said pultrusion device.

According to one advantageous embodiment of the method of producing the invention, the method comprises drying the fibers before the fibers enter the pultrusion device, and/or dehumidifying the environment around the fibers so as to make relative humidity of the environment around the fibers lower than 60%.

As known from content above, the fiber impregnating system of the present invention may effectively stabilize the pressure within an infusion box such that the fiber impregnating system may be applicable not only to the fabrication of pultrusion products with felts/textiles, but also to the production of pultrusion products made of pure unidirectional fiber yarn, as a result of which the efficiency of production is significantly increased.

### Description of Figures

The following is a further description for the technical solution of the present invention given with the drawings and embodiments combined.
Fig. 1 is a longitudinal-section structural diagram of the first specific implementation mode for an infusion box of the fiber impregnating system of the present invention;
Fig. 2 is a cross-section structural diagram along B-B of the infusion box of the fiber impregnating system illustrated in Fig. 1;
Fig. 3 is a structural diagram of the second specific implementation mode for an infusion box of the fiber impregnating system of the present invention;
Fig. 4 is a cross-section structural diagram along B-B of the infusion box of the fiber impregnating system illustrated in Fig. 3;
Fig. 5 is a structural diagram of the third specific implementation mode for an infusion box of the fiber impregnating system of the present invention;
Fig. 6 is a cross-section structural diagram along B-B of the infusion box of the fiber impregnating system illustrated in Fig. 5;
Fig. 7 is a structural diagram of the fourth specific implementation mode for an infusion box of the fiber impregnating system of the present invention; and
Fig. 8 is a structural diagram of a specific implementation mode of the pultrusion device of the present invention.

### Detailed Description of the Invention

The following part describes the specific implementation mode of the present invention with the drawings combined in detail. It is first necessary to state that the terms that are mentioned or might be mentioned in this Description about positions, such as "above", "below", "left", "right", "before", "after", "inner side", "outer side", "top" and "bottom", are defined relative to the constructions shown in all figures, which are relative concepts and likely to vary according to different positions or operation conditions. Thus, these or other positional terms not mentioned should not be understood as terms of limitation.

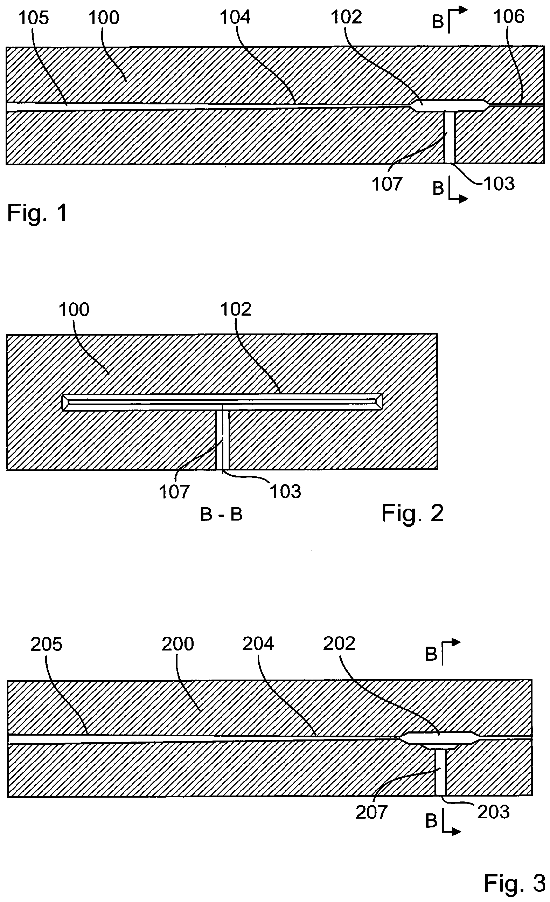

Fig. 1 illustrates a specific implementation mode of the fiber-impregnating system of the present invention, the fiber-impregnating system including: an infusion box 100 with its dimension pertaining to the extrudate specification (for example, a product made of a plate-like composite material of pultrusion with 200mm width and 2mm thickness), wherein the infusion box 100 has a length of 50mm-600mm, preferably 50mm-450mm. In combination with D2, the infusion box 100 is provided with a mold cavity with an infusion cavity 102 for fibers to pass (fibers here may also include fiber felts or textiles or the like), an infusion hole 103 for resin infusion and a resin passage 107 for communicating with the infusion cavity 102 and the infusion hole 103. Optionally, a central axis of the resin passage 107 is not 90 degrees relative to the passing direction of the fibers. The mold cavity further includes a compression segment 104 upstream of the infusion cavity 102, the compression segment 104 having an entrance with a depth greater than or equal to a depth of its exit, the depth of the entrance of the compression segment 104 ranging from 0 to 2 mm, preferably 0 to 1mm, and most preferably 0 to 0.7mm, and the depth of the exit of the compression segment 104 ranging from 0mm to 2 mm, preferably 0mm to 0.5mm, and most preferably 0mm to 0.3mm. In the present invention, the mold cavity depth of the infusion box indicates the difference obtained by subtracting from the thickness of the mold cavity the thickness of an extrudate produced by the impregnating system in a corresponding position of the mold cavity. Moreover, the compression segment 104 has a length ranging from 5mm to 400mm, preferably 5mm to 200mm, more preferably 5mm to 100mm, and most preferably 5mm to 50mm. Preferably, the longitudinal section of the compression segment is tapered or rectangular in the passing direction of the fibers. As shown in Fig. 1, the mold cavity further includes a tapering segment 105 upstream of the compression segment 104, an entrance of the tapering segment 105 has a depth greater than or that of its exit, wherein the ratio between cross section areas of the entrance and exit of the compression segment 104 is lower than or equal to the ratio between cross section areas of the entrance and exit of the tapering segment 105, preferably the longitudinal section of the tapering segment 105 is tapered in the passing direction of the fibers. For the purpose of clearness, Fig. 1 exaggeratedly shows a tapering segment 105 for auxiliary impregnation within the infusion box 100, the tapering segment 105 having a length ranging from 5 mm to 400 mm, preferably 20mm to 275mm and most preferably 20mm to 150mm, with an entrance depth ranging from 0.05mm to 3mm, preferably 0.05mm to 1.5mm and most preferably 0.05mm to 1.2mm, and with an end depth ranging from 0mm to 2mm, preferably 0mm to 1mm and most preferably 0mm to 0.3mm, so as to help to prevent felts/textiles from breaking due to an excessively big strain. Certainly, one skilled may realize that, to facilitate processing, it is also feasible to omit the tapering segment 105.

Known from Fig. 1, the fiber-impregnating system is optionally provided with an impregnation-assisting segment 106 downstream of the infusion cavity 102, the impregnation-assisting segment 106 having a length ranging from 5 mm to 100 mm, preferably 5 mm to 70 mm. And, according to the embodiment shown in Fig. 1, the impregnation-assisting segment 106 is arranged within the infusion box 100. Moreover, the impregnation-assisting segment 106 an exit having a depth ranging from 0mm to 4 mm, preferably 0 mm to 3 mm and most preferably 0 mm to 1 mm, and the depth of an entrance of the impregnation-assisting segment 106 is greater than or equal to that of its exit. Preferably, a longitudinal section of the impregnation-assisting segment 106 in the passing direction of the fibers is tapered or rectangular.

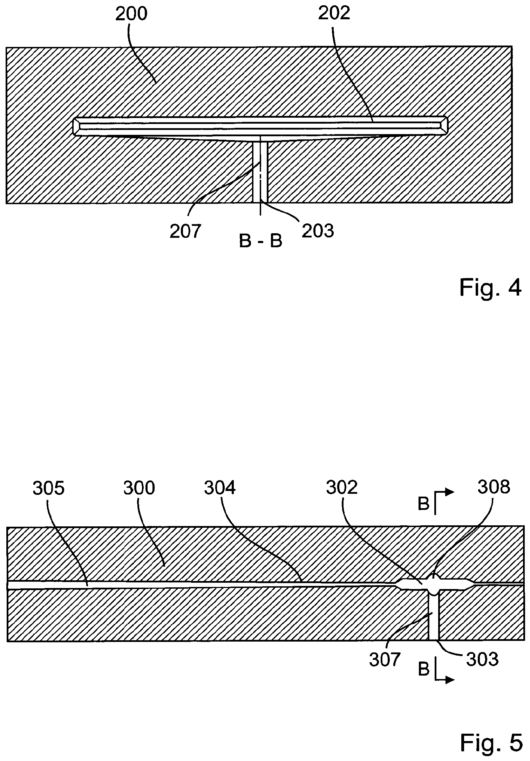

As shown in the drawings, the end portion of the compression segment 104 is connected with the entrance of the infusion cavity 102, wherein the infusion cavity 102 is mainly intended to provide sufficient resin for passing fibers and offering a given impregnating time and pressure. The infusion cavity102 has a length ranging from 2 mm to 100 mm , preferably 10mm to 70mm, and has a depth from 0.4 mm to 40 mm, preferably 0.4mm to 10mm and most preferably 0.4mm to 5mm. Preferably, the infusion cavity 202 has a depth decreasing from a part where a resin passage 207 communicates with the infusion cavity 202 to two sides, along circumference of the infusion cavity 202 (as illustrated in Figs. 3 and 4). It shall be particularly pointed out that the infusion cavity with different depths may effectively balance the infusion pressure inside the infusion cavity 202. Moreover, a longitudinal section of the infusion cavity 202 in the passing direction of the fibers may preferably be tapered, semicircular, water drop shaped, rectangular, trapezoidal, rhombic or the like or a combination of them. Also, one skilled in the art may realize that the length, depth and the cross-section shape of an infusion cavity of the present invention may be designed flexibly according to various practical conditions.

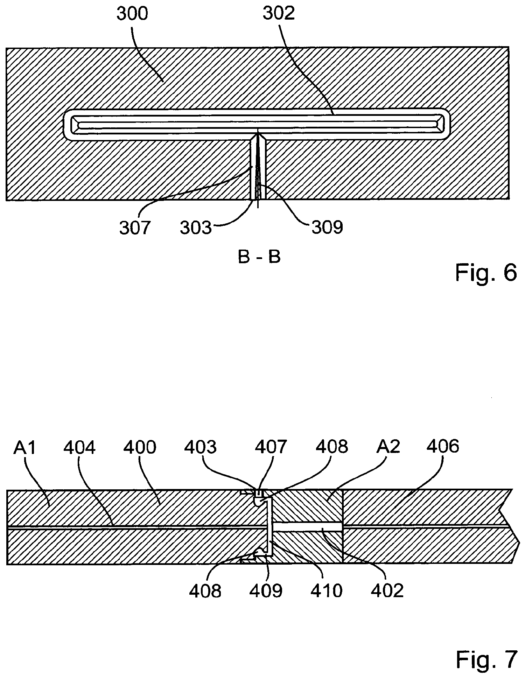

The present invention further provides a fiber-impregnating system comprising: an infusion box 300 provided with a mold cavity that has an infusion cavity 302 for fibers to pass, an infusion hole 303 for resin infusion, resin flow channels 308 communicating with the infusion cavity 302 to distribute resin evenly, and a resin passage 307 for communicating with the infusion hole 303 and the resin flow channels 308, wherein the resin flow channels 308 may be configured to be semi-circular grooves arranged inside the mold cavity having the infusion cavity 302, with a width ranging from 2 mm to 30 mm and a depth ranging from 1 mm to 30 mm. In the invention, the width of resin flow channels indicates the dimension of the grooves in the passing direction of the fibers. As could be understood certainly, the cross section of the resin flow channel 308 may be shaped as a rectangle, a trapezoid or a combination of them, and the depth of the resin flow channel 308 ranges from 1mm to 30 mm. In the embodiments shown in Figs. 5 and 6, the resin flow channel 308 is configured to be a loop formed upon a circumference of the mold cavity with the infusion cavity 302.

Besides, the communicating part of the resin passage 307 and the resin flow channels 308 are respectively positioned at the top or bottom of the resin flow channels 308 upon the circumference of the mold cavity with the infusion cavity 302. More preferably, the resin flow channel 308 has a depth decreasing from a part where the resin passage 307 communicates with the resin flow channel 308 to two sides, along circumference of the mold cavity with the infusion cavity 302, so as to reduce the shock from infusion pressure. As shown illustrated in Fig. 6, a shunting device 309 may also be provided at a communicating part of the resin passage 307 and the resin flow channel 308 such that resin will flow along the resin flow channel 308 in different directions.

In the embedment shown in Fig. 7, the resin flow channel 408 is close to the entrance or exit of the infusion cavity 402, and the projection of a central axis of the resin flow channel 408 is perpendicular to the passing direction of the fibers. Optionally, the resin flow channel 408 may be at least two in number, which are parallel to each other and communicating with each other by a gap 409 having a width ranging 0.5 mm to 200 mm and a depth ranging from 0.5 mm to 10 mm so as to make infusion pressure more uniform. In the invention, the width of the gap indicates the dimension of the gap in the passing direction of the fibers, and the depth of the gap indicates the dimension of the gap on the normal of an adjacent resin flow channel. For further feasibly, the gap 409 is configured to be a loop formed along the resin flow channel 408; the resin flow channel 408 communicates with the infusion cavity 402 by the gap 409 having a width ranging from 0.5 mm to 200 mm, preferably 0.5mm to 30mm, and a depth ranging from 0.5 mm to 50 mm, preferably 0.5mm to 30mm. In this embodiment, resin fills up the resin flow channel 408 first, and enters the infusion cavity 402 almost simultaneously through the loop-shaped gap 409, which, to the greatest extent, balances the impregnating speed of fibers in every part of the infusion cavity 402.

Known by combining above embodiments into other preferable embodiments, the infusion box 400 may consist of a separable first module A1 and a separable second module A2 having internal cavities connected to one another front and rear to form the mold cavity with the infusion cavity 402; and, the gap 410 between the first module A1 and the second module A2 forms a recess at the entrance of the infusion cavity 402, and the recess may be connected with the resin flow channel 408 via the loop-shaped gap 409 at the communicating part of the first module A1 and the second module A2 such that the resin flow channel 408 communicates with the infusion cavity 402, wherein the gap 409 has a width ranging from 0.5mm to 100mm, preferably 0.5mm to 20mm and most preferably 0.5mm to 5mm, and a deep ranging from 0.5mm to 50mm, preferably 0.5mm to 40mm and most preferably 0.5mm to 20mm. In the invention, the width of the gap indicates the dimension of the gap in the passing direction of the fibers, and the depth of the gap indicates the dimension of the gap on the normal of an adjacent mold cavity. The resin flow channel 408 is formed by a gap between an outer surface of the first module A1 and an internal surface of a cavity of the second module A2, and communicates with the resin passage 407 on the second module A2. Further, the resin flow channel 408 is a circumferential loop around the cavity of the second module A2. As clearly shown in the drawings, the infusion hole 403 is positioned upon the second module A2, and communicates with the resin flow channel 408 by the resin passage 407. As shown in Fig. 7, the mold cavity further includes a compression segment 404 upstream of the infusion cavity 402, the compression segment 404 having an entrance with a depth greater than or equal to a depth of its exit, and the depth of the entrance and exit of the compression segment ranging from 0 to 2 mm; and, the whole or a part of the compression segment 404 is positioned inside the first module A1, and the whole or a part of the infusion cavity 402 is positioned inside the second module A2. It shall be explained that the circumstance of the infusion box 400 being formed by processing a plurality of modules will be so helpful to clean the inside of infusion box 400. In this embodiment, the first module A1 and the second module A2 are processed by a whole block, which, in view of product complexity, may also be machined by sheets and be assembled by more detachable modules. Optionally, the infusion box 400 may consist of more than two modules, which may further include the aforesaid tapering segment and impregnation-assisting segment 406 and further the aforesaid infusion cavity 402. The present application merely gives an example of an infusion box consisting of two modules, and the infusion box designed by similar methods, according to the understanding of those skilled in the art, will also fall within the scope of the present invention.

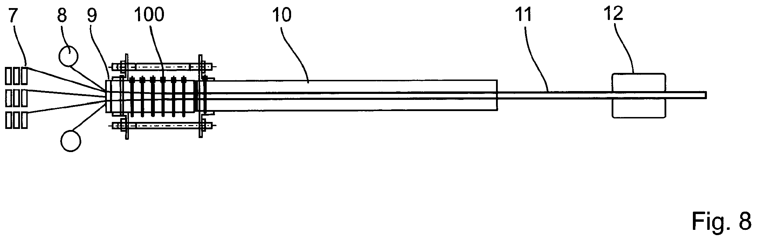

Furthermore, the present invention provides a pultrusion device, which is provided with the above said fiber-impregnating system (as shown in Fig. 8). The pultrusion device also includes a mold 10 downstream of the infusion box, wherein the mold 10 may be made of metal, such as die steel ANK80 or P20, and may be connected and secured with the mold via a positioning device such as a positioning pin, a concave-and-convex table or a chute so as to make a mold cavity inside the infusion box 100 for fiber passing and a mold cavity inside the mold 10 for fiber passing concentric. Preferably, the infusion box 100 and the mold 10 are tightly locked via a quick lock such that the infusion box can be detached from the mold quickly after tight lock. Meanwhile, one skilled well knows that a sealing device may be set between the infusion box 100 and mold 10 and between the different modules A1 and A2 of infusion box 100 to ensure seal.

Out of consideration of simplifying the device, the whole or a part of the infusion box 100 may be integrated with the mold 10. As an example, the impregnation-assisting segment 106 may also be arranged within the mold 10 and be processed together with the mold cavity inside the mold 10 during the processing of the mold 10. Also, other parts of the mold cavity inside the infusion box 100 may be concentrically connected, by the positioning device, locking device, sealing device, etc., with the mold cavity positioned in the mold 10 and including the shown impregnation-assisting segment 106. Further, the whole or a part of the infusion cavity 102 of the infusion box 100 may be integrated with the mold 10; furthermore, the whole of the mold cavity of the infusion box 100 is integrated with the mold 10, i.e., during processing, the whole or a part of the internal mold cavity of the infusion box 100 and the internal mold cavity of the mold 10 are processed on the same piece of die steel, and the mold 10 including an infusion box 100 is formed after the molding of upper and lower sheets, so as to avoid the mutual sealing and positioning of infusion box 100 and mold 10 mentioned in preceding embodiments.

Fig. 8 shows a practical application of the fiber-impregnating system of the present invention to a pultrusion device: 194 bundles of glass fiber yarn 7 and glass-fiber stitch felts 8 are guided out of a yarn rack, and then through a three-stage yarn-guiding plate, which next enter an infusion box 100 through a pre-formed plate 9 and, after that, go through a mold 10; the glass fiber yarn 7 and glass-fiber stitch felts 8 going through the mold cavity of mold 10 are bound firmly with a hauling rope, and a hauling device 12 does not stop hauling yarn forward until all the yarn is well ordered. The temperatures of mold 10 from the entrance to the exit are in the following order: 40°C/60°C/190°C/170°C. An infusion machine is powered on, which pumps component A (Desmodur1511L) and component B (one hundred of BaydurPUL2500s and four Baydur18BD101s are mixed according to a weight ratio) continuously to a static mixing head according to the weight ratio 114:100; the components after the mix of the mixing head fill the infusion box 100 up and, at the mean time, the glass fiber yarn 7 and glass-fiber stitch felts 8 are fully impregnated, wherein the infusion pressure within infusion box 100 is controlled between 1-15 bar. The fiber yarn fully impregnated by infusion box 100 is continuously pulled by the hauling device 12 with clamps through the mold 10, which, after being cured by the heated mold 10, forms a product 11 that will be continuously drawn out of the mold 10, the results of wherein the hauling speed is 0.4 m/min, the sample is well impregnated and no resin leak occurs to the infusion box 100. In this process, a dehumidifier is employed to control the relative ambient moisture around fibers within 60%, preferably within 40%, so as to reduce the influence from moisture on the quality of compound materials.

The fiber-impregnating system of the present invention also has the second application in the pultrusion process: with glass fiber felts removed while the amount of glass yarn is increased to 260 bundles and the first embodiment is repeated, the results of which the sample is well impregnated and no resin leak occurs. Aforesaid embodiments also provide a method of fabricating a compound material of pultrusion; that is, the compound material of pultrusion may be produced by the aforesaid pultrusion device.

### List of Material and Equipment

| Material Name | Specification /Brand Name | Supplier |
|---|---|---|
| Modified Diphenyl Methane Diisocyanate | Desmodur1511L | Bayer Material Science LLC |
| Polyatomic Alcohol | Baydur PUL2500 Component B | Bayer Material Science LLC |
| Internal Releasing Agent | Baydur 18BD101 | Bayer Material Science LLC |
| Alkali-Free Glass Fiber Yarn | ECT 469P-2400 , 2400tex | Chongqing Polycomp International Corporation |
| Alkali-Free Glass Fiber Stitch Felt | EMK-300, 300g/m2 | Chongqing Polycomp International Corporation |
| Pultrusion Device | 10-ton Hydraulic Pultrusion Device | Nanjing Loyalty Composite Material Equipment Manufacture Company |
| Infusion Machine | Hydraulic Mini Link System | Magnum Venus Products |

In conclusion, the fiber-impregnating system of the present invention may increase and control the resin amount and pressure within an infusion box soundly, which may enable fast and excellent impregnation for fiber products and, meanwhile, is applicable to the production of pultrusion composite materials with felts or of full yarn. Therefore, it is suggested that the fiber-impregnating system be applied in pultrusion equipment to increase the efficiency in production.

Several implementation modes of the impregnating system are exampled above to specifically illustrate the fiber-impregnating system, a pultrusion device with the fiber-impregnating system of the present invention and the method of producing pultrusion composite materials of the present invention. These examples are merely for explaining the principle and the implementation mode of the present invention, which should not be deemed as a limitation to the present invention. Without deviation from the scope of the present invention, one common person skilled in the art may further make varieties and modifications-for example, the method of producing may further include a drying step before the fibers enter the pultrusion device, and/or a step for dehumidifying the ambience around the fibers to make the humidity there lower than 60%. Therefore, all equivalent technical solutions are within the scope of the present invention and limited by all claims of the present invention.

## Claims

1. A method of producing a composite material of pultrusion, **characterized in that** the composite material of pultrusion (11) is produced by a pultrusion device, which is provided with a fiber-impregnating system comprising:
an infusion box (100, 200, 300, 400) provided with a mold cavity that has an infusion cavity (102, 202, 302, 402) for fibers to pass, an infusion hole for resin infusion,
a resin passage (107, 207, 307, 407) for communicating with the infusion cavity (102, 202, 302, 402) and the infusion hole (103, 203, 303, 403),
the mold cavity further including a compression segment (104, 204, 304, 404) upstream of the infusion cavity (102, 202, 302, 402),
the compression segment (104, 204, 304, 404) having an entrance with a depth greater than or equal to a depth of the compression segment exit, the depth of the entrance and exit of the compression segment ranging from 0 to 2 mm,
and includes a mold downstream (10) of the infusion box,
wherein the depth of the compression segment entrance and exit respectively indicates the difference obtained by subtracting from the thickness of the compression segment cavity the thickness of an extrudate produced by the impregnating system in a corresponding position of the compression segment cavity.

2. The method according to claim 1, **characterized in that** the mold cavity further includes a tapering segment (105, 205, 305) upstream of the compression segment, and an entrance of the tapering segment has a depth greater than that of an exit of the tapering segment, wherein the ratio between cross section areas of the entrance and exit of the compression segment is lower than or equal to the ratio between cross section areas of the entrance and exit of the tapering segment,
wherein the depth of the tapering segment entrance and exit respectively indicates the difference obtained by subtracting from the thickness of the tapering segment cavity the thickness of an extrudate produced by the impregnating system in a corresponding position of the tapering segment cavity.

3. The method according to claim 1, **characterized in that** the compression segment has a length ranging from 5 mm to 400 mm.

4. The method according to claim 2, **characterized in that** the depth of the entrance of the tapering segment ranges from 0.05 mm to 3 mm, and the depth of an end of the tapering segment ranges from 0-2 mm, and the length of the tapering segment ranges from 20 mm- 400 mm.

5. The method according to claims 1-4, **characterized in that** the fiber-impregnating system further includes an impregnation-assisting segment (106, 406) downstream of the infusion cavity, the impregnation-assisting segment having a length ranging from 5 mm to 100 mm.

6. The method according to claim 5, **characterized in that** the depth of an exit of the impregnation-assisting segment ranges from 0-4 mm, and the depth of an entrance of the impregnation-assisting segment is greater than or equal to that of the depth of the exit of the impregnation-assisting segment,
wherein the depth of the impregnation-assisting segment entrance and exit respectively indicates the difference obtained by subtracting from the thickness of the impregnation-assisting segment cavity the thickness of an extrudate produced by the impregnating system in a corresponding position of the impregnation-assisting segment cavity.

7. The method according to claim 1, comprising: an infusion box (100, 200, 300, 400) provided with a mold cavity that has an infusion cavity (102, 202, 302, 402) for fibers to pass, **characterized in that** the mold cavity has an infusion hole (103, 203, 303, 403) for resin infusion, resin flow channels (308, 408) communicating with the infusion cavity (102, 202, 302, 402) to distribute resin evenly, and a resin passage (107, 207, 307, 407) for communicating with the infusion hole (103, 203, 303, 403) and the resin flow channels (308, 408).

8. The method according to claim 7, **characterized in that** the resin flow channels are grooves arranged within the mold cavity, and have a width ranging from 2 mm to 30 mm and a depth ranging from 1 mm to 30 mm.

9. The method according to any one of claims 7 or 8, **characterized in that** there are at least two resin flow channels that are parallel to each other and communicate with each other by a gap (409) having a width ranging 0.5 mm to 200 mm and a depth ranging from 0.5 mm to 10 mm.

10. The method according to any one of claims 7 or 8, **characterized in that** the resin flow channel communicates with the infusion cavity by a gap (410) having a width ranging from 0.5 mm to 200 mm and a depth ranging from 0.5 mm to 10 mm.

11. The method according to claim 7, **characterized in that** the infusion box includes a plurality of detachable modules having internal cavities connected to one another front-to-rear to form the mold cavity with the infusion cavity.

12. The method according to claim 11, **characterized in that** the infusion box includes a first module (A1) and a second module (A2) arranged front-to- rear in the passing direction of fibers, wherein the mold cavity further includes a compression segment upstream of the infusion cavity, the compression segment having an entrance with a depth greater than or equal to a depth of an exit of the compression segment, the depth of the entrance and exit of the compression segment ranging from 0 to 2 mm; and, the whole or a part of the compression segment is positioned inside the first module, and the whole or a part of the infusion cavity is positioned inside the second module.

13. The method according to claim 12, **characterized in that** the resin flow channel and the infusion cavity are communicated by a gap (410) at a joint part of the first and second modules in the passing direction of the fibers, the gap having a width ranging from 0.5 mm to 100 mm and a depth ranging from 0.5 mm to 50 mm.

14. The method according to claim 11, **characterized in that** the fiber-impregnating system further includes an impregnation-assisting segment downstream of the infusion cavity, the impregnation-assisting segment having a length ranging from 5 mm to 100 mm with an exit having a depth ranging from 0 to 4 mm; the depth of an entrance of the impregnation-assisting segment is greater than or equal to that of an exit of the impregnation-assisting segment, and a longitudinal section of the impregnation-assisting segment in the passing direction of the fibers is tapered or rectangular,
wherein the depth of the impregnation-assisting segment entrance and exit respectively indicates the difference obtained by subtracting from the thickness of the impregnation-assisting segment cavity the thickness of an extrudate produced by the impregnating system in a corresponding position of the impregnation-assisting segment cavity.

15. The method according to any one of claims 1 to 14, comprising:
drying the fibers (7) before the fibers enter the pultrusion device, and/or
dehumidifying the environment around the fibers so as to make relative humidity of the environment around the fibers lower than 60%.

## Patentansprüche

1. Verfahren zur Herstellung eines Pultrusion-Verbundmaterials, **dadurch gekennzeichnet, dass** das Pultrusion-Verbundmaterial (11) durch eine Pultrusionsvorrichtung hergestellt wird, die mit einem Faserimprägniersystem ausgestattet ist, das umfasst:
eine Infusionszelle (100, 200, 300, 400), die einen Formhohlraum aufweist, der einen Infusionshohlraum (102, 202, 302, 402) zum Durchtreten von Fasern aufweist, ein Infusionsloch zur Harzinfusion,
einen Harzdurchgang (107, 207, 307, 407) in Kommunikation mit dem Infusionshohlraum (102, 202, 302, 402) und dem Infusionsloch (103, 203, 303, 403),
wobei der Formhohlraum ferner ein Kompressionssegment (104, 204, 304, 404) dem Infusionshohlraum (102, 202, 302, 402) vorgelagert aufweist,
wobei das Kompressionssegment (104, 204, 304, 404) einen Eingang mit einer Tiefe, die größer als die oder gleich der Tiefe des Ausgangs des Kompressionssegments ist, aufweist, wobei die Tiefe des Eingangs und des Ausgangs des Kompressionssegments in dem Bereich von 0 bis 2 mm liegt,
und ein Formwerkzeug (10) der Infusionszelle nachgelagert aufweist,
wobei die Tiefe des Eingangs und des Ausgangs des Kompressionssegments jeweils den Unterschied angeben, der durch Subtraktion der Dicke eines von dem Imprägniersystem erzeugten Extrudats von der Dicke des Hohlraums des Kompressionssegments an einer entsprechenden Position des Hohlraums des Kompressionssegments erhalten wird.

2. Verfahren gemäß Anspruch 1, **dadurch gekennzeichnet, dass** der Formhohlraum ferner ein sich verjüngendes Segment (105, 205, 305) dem Kompressionssegment vorgelagert aufweist und ein Eingang des sich verjüngenden Segments eine größere Tiefe als jene eines Ausgangs des sich verjüngenden Segments aufweist, wobei das Verhältnis zwischen Querschnittsflächen des Eingangs und des Ausgangs des Kompressionssegments kleiner als oder gleich dem Verhältnis zwischen Querschnittsflächen des Eingangs und des Ausgangs des sich verjüngenden Segments ist,
wobei die Tiefe des Eingangs und des Ausgangs des sich verjüngenden Segments jeweils den Unterschied angeben, der durch Subtraktion der Dicke eines von dem Imprägniersystem erzeugten Extrudats von der Dicke des Hohlraums des sich verjüngenden Segments an einer entsprechenden Position des Hohlraums des sich verjüngenden Segments erhalten wird.

3. Verfahren gemäß Anspruch 1, **dadurch gekennzeichnet, dass** das Kompressionssegment eine Länge in dem Bereich von 5 mm bis 400 mm aufweist.

4. Verfahren gemäß Anspruch 2, **dadurch gekennzeichnet, dass** die Tiefe des Eingangs des sich verjüngenden Segments in dem Bereich von 0,05 mm bis 3 mm liegt und die Tiefe eines Endes des sich verjüngenden Segments in dem Bereich von 0-2 mm liegt und die Länge des sich verjüngenden Segments in dem Bereich von 20 mm bis 400 mm liegt.

5. Verfahren gemäß Ansprüchen 1-4, **dadurch gekennzeichnet, dass** das Faserimprägniersystem ferner ein Imprägnierunterstützungssegment (106, 406) dem Infusionshohlraum nachgelagert aufweist, wobei das Imprägnierunterstützungssegment eine Länge in dem Bereich von 5 mm bis 100 mm aufweist.

6. Verfahren gemäß Anspruch 5, **dadurch gekennzeichnet, dass** die Tiefe eines Ausgangs des Imprägnierunterstützungssegments in dem Bereich von 0-4 mm liegt und die Tiefe eines Eingangs des Imprägnierunterstützungssegments größer als die oder gleich der Tiefe des Ausgangs des Imprägnierunterstützungssegments ist,
wobei die Tiefe eines Eingangs und eines Ausgangs des Imprägnierunterstützungssegments jeweils den Unterschied angeben, der durch Subtraktion der Dicke eines von dem Imprägniersystem erzeugten Extrudats von der Dicke des Hohlraums des Imprägnierunterstützungssegments an einer entsprechenden Position des Hohlraums des Imprägnierunterstützungssegments erhalten wird.

7. Verfahren gemäß Anspruch 1, umfassend: eine Infusionszelle (100, 200, 300, 400), die einen Formhohlraum aufweist, der einen Infusionshohlraum (102, 202, 302, 402) zum Durchtreten von Fasern aufweist, **dadurch gekennzeichnet, dass** der Formhohlraum ein Infusionsloch (103, 203, 303, 403) für die Harzinfusion, Harzflusskanäle (308, 408) in Kommunikation mit dem Infusionshohlraum (102, 202, 302, 402) zum gleichmäßigen Verteilen von Harz und einen Harzdurchgang (107, 207, 307, 407) in Kommunikation mit dem Infusionsloch (103, 203, 303, 403) und den Harzflusskanälen (308, 408) aufweist.

8. Verfahren gemäß Anspruch 7, **dadurch gekennzeichnet, dass** die Harzflusskanäle Rillen sind, die innerhalb des Formhohlraums angeordnet sind und eine Breite in dem Bereich von 2 mm bis 30 mm und eine Tiefe in dem Bereich von 1 mm bis 30 mm aufweisen.

9. Verfahren gemäß einem der Ansprüche 7 oder 8, **dadurch gekennzeichnet, dass** wenigstens zwei Harzflusskanäle vorliegen, die parallel zueinander sind und durch einen Spalt (409), der eine Breite in dem Bereich von 0,5 mm bis 200 mm und eine Tiefe in dem Bereich von 0,5 mm bis 10 mm aufweist, miteinander kommunizieren.

10. Verfahren gemäß einem der Ansprüche 7 oder 8, **dadurch gekennzeichnet, dass** der Harzflusskanal durch einen Spalt (410), der eine Breite in dem Bereich von 0,5 mm bis 200 mm und eine Tiefe in dem Bereich von 0,5 mm bis 10 mm aufweist, mit dem Infusionshohlraum kommuniziert.

11. Verfahren gemäß Anspruch 7, **dadurch gekennzeichnet, dass** die Infusionszelle eine Vielzahl von ablösbaren Modulen mit Innenhohlräumen aufweist, die Vorderseitezu-Rückseite miteinander verbunden sind, um den Formhohlraum mit dem Infusionshohlraum zu bilden.

12. Verfahren gemäß Anspruch 11, **dadurch gekennzeichnet, dass** die Infusionszelle ein erstes Modul (A1) und ein zweites Modul (A2) aufweist, die Vorderseite-zu-Rückseite in der Faserdurchtrittsrichtung angeordnet sind, wobei der Formhohlraum ferner ein Kompressionssegment dem Infusionshohlraum vorgelagert aufweist, wobei das Kompressionssegment einen Eingang mit einer Tiefe aufweist, die größer als die oder gleich der Tiefe des Ausgangs des Kompressionssegments ist, wobei die Tiefe des Eingangs und des Ausgangs des Kompressionssegments in dem Bereich von 0 bis 2 mm liegt; und wobei das gesamte oder ein Teil des Kompressionssegments im Inneren des ersten Moduls angeordnet ist und das gesamte oder ein Teil des Infusionshohlraums im Inneren des zweiten Moduls angeordnet ist.

13. Verfahren gemäß Anspruch 12, **dadurch gekennzeichnet, dass** der Harzflusskanal und der Infusionshohlraum durch einen Spalt (410) an einem Verbindungsteil des ersten und des zweiten Hohlraums in der Faserdurchtrittsrichtung kommunizieren, wobei der Spalt eine Breite in dem Bereich von 0,5 mm bis 100 mm und eine Tiefe in dem Bereich von 0,5 mm bis 50 mm aufweist.

14. Verfahren gemäß Anspruch 11, **dadurch gekennzeichnet, dass** das Faserimprägniersystem ferner ein Imprägnierunterstützungssegment dem Infusionshohlraum nachgelagert aufweist, wobei das Imprägnierunterstützungssegment eine Länge in dem Bereich von 5 mm bis 100 mm mit einem Ausgang mit einer Tiefe in dem Bereich von 0 bis 4 mm aufweist; wobei die Tiefe eines Eingangs des Imprägnierunterstützungssegments größer als jene oder gleich jener eines Ausgangs des Imprägnierunterstützungssegments ist und ein Längsabschnitt des Imprägnierunterstützungssegments in der Faserdurchtrittsrichtung verjüngt oder rechteckig ist,
wobei die Tiefe des Eingangs des und des Ausgangs des Imprägnierunterstützungssegments jeweils den Unterschied angeben, der durch Subtraktion der Dicke eines von dem Imprägniersystem erzeugten Extrudats von der Dicke des Hohlraums des Imprägnierunterstützungssegments an einer entsprechenden Position des Hohlraums des Imprägnierunterstützungssegments erhalten wird.

15. Verfahren gemäß einem der Ansprüche 1 bis 14, umfassend:
Trocknen der Fasern (7), bevor die Fasern in die Pultrusionsvorrichtung eintreten, und/oder
Entfeuchten der Umgebung um die Fasern, um die relative Feuchtigkeit der Umgebung um die Fasern auf einen Wert von weniger als 60% einzustellen.

## Revendications

1. Procédé de production d'un matériau composite de pultrusion, **caractérisé en ce que** le matériau composite de pultrusion (11) est produit par un dispositif de pultrusion, qui est muni d'un système d'imprégnation de fibres comprenant :
une boîte d'infusion (100, 200, 300, 400) munie d'une cavité de moule qui possède une cavité d'infusion (102, 202, 302, 402) pour que des fibres passent, un trou d'infusion pour une infusion de résine,
un passage de résine (107, 207, 307, 407) pour la communication avec la cavité d'infusion (102, 202, 302, 402) et le trou d'infusion (103, 203, 303, 403),
la cavité de moule comprenant en outre un segment de compression (104, 204, 304, 404) en amont de la cavité d'infusion (102, 202, 302, 402),
le segment de compression (104, 204, 304, 404) possédant une entrée dotée d'une profondeur supérieure ou égale à une profondeur de la sortie de segment de compression, la profondeur de l'entrée et de la sortie du segment de compression se situant dans la plage de 0 à 2 mm,
et comprenant un moule en aval (10) de la boîte d'infusion,
la profondeur de l'entrée et de la sortie de segment de compression indiquant respectivement la différence obtenue en soustrayant de l'épaisseur de la cavité de segment de compression l'épaisseur d'un extrudat produit par le système d'imprégnation dans une position correspondante de la cavité de segment de compression.

2. Procédé selon la revendication 1, **caractérisé en ce que** la cavité de moule comprend en outre un segment effilé (105, 205, 305) en amont du segment de compression, et une entrée du segment effilé possède une profondeur supérieure à celle d'une sortie du segment effilé, le rapport entre des aires de section transversale de l'entrée et de la sortie du segment de compression étant inférieur ou égal au rapport entre des aires de section transversale de l'entrée et de la sortie du segment effilé,
la profondeur de l'entrée et de la sortie de segment effilé respectivement indiquant la différence obtenue en soustrayant de l'épaisseur de la cavité de segment effilé l'épaisseur d'un extrudat produit par le système d'imprégnation dans une position correspondante de la cavité de segment effilé.

3. Procédé selon la revendication 1, **caractérisé en ce que** le segment de compression possède une longueur dans la plage de 5 mm à 400 mm.

4. Procédé selon la revendication 2, **caractérisé en ce que** la profondeur de l'entrée du segment effilé se situe dans la plage de 0,05 mm à 3 mm, et la profondeur d'une extrémité du segment effilé se situant dans la plage de 0 à 2 mm, et la longueur du segment effilé se situant dans la plage de 20 mm à 400 mm.

5. Procédé selon les revendications 1 à 4, **caractérisé en ce que** le système d'imprégnation de fibres comprend en outre un segment d'assistance à l'imprégnation (106, 406) en aval de la cavité d'infusion, le segment d'assistance à l'imprégnation possédant une longueur se situant dans la plage de 5 mm à 100 mm.

6. Procédé selon la revendication 5, **caractérisé en ce que** la profondeur d'une sortie du segment d'assistance à l'imprégnation se situe dans la plage de 0 à 4 mm, et la profondeur d'une entrée du segment d'assistance à l'imprégnation est supérieure ou égale à celle de la profondeur de la sortie du segment d'assistance à l'imprégnation,
la profondeur de l'entrée et de la sortie de segment d'assistance à l'imprégnation indiquant respectivement la différence obtenue en soustrayant de l'épaisseur de la cavité de segment d'assistance à l'imprégnation l'épaisseur d'un extrudat produit par le système d'imprégnation dans une position correspondante de la cavité de segment d'assistance à l'imprégnation.

7. Procédé selon la revendication 1, comprenant : une boîte d'infusion (100, 200, 300, 400) munie d'une cavité de moule qui possède une cavité d'infusion (102, 202, 302, 402) pour que des fibres passent, **caractérisé en ce que** la cavité de moule possède un trou d'infusion (103, 203, 303, 403) pour une infusion de résine, des canaux d'écoulement de résine (308, 408) communiquant avec la cavité d'infusion (102, 202, 302, 402) pour distribuer la résine de manière uniforme, et un passage de résine (107, 207, 307, 407) pour la communication avec le trou d'infusion (103, 203, 303, 403) et les canaux d'écoulement de résine (308, 408).

8. Procédé selon la revendication 7, **caractérisé en ce que** les canaux d'écoulement de résine sont des sillons agencés à l'intérieur de la cavité de moule, et possèdent une largeur dans la plage de 2 mm à 30 mm et une profondeur dans la plage de 1 mm à 30 mm.

9. Procédé selon l'une quelconque des revendications 7 et 8, **caractérisé en ce qu'**il y a au moins deux canaux d'écoulement de résine qui sont parallèles l'un à l'autre et communiquent l'un avec l'autre par un intervalle (409) possédant une largeur dans la plage de 0,5 mm à 200 mm et une profondeur dans la plage de 0,5 mm à 10 mm.

10. Procédé selon l'une quelconque des revendications 7 et 8, **caractérisé en ce que** le canal d'écoulement de résine communique avec la cavité d'infusion par un intervalle (410) possédant une largeur dans la plage de 0,5 mm à 200 mm et une profondeur dans la plage de 0,5 mm à 10 mm.

11. Procédé selon la revendication 7, **caractérisé en ce que** la boîte d'infusion comprend une pluralité de modules détachables possédant des cavités internes reliées les unes aux autres d'avant en arrière pour former la cavité de moule comportant la cavité d'infusion.

12. Procédé selon la revendication 11, **caractérisé en ce que** la boîte d'infusion comprend un premier module (A1) et un deuxième module (A2) agencés d'avant en arrière dans la direction de passage des fibres, la cavité de moule comprenant en outre un segment de compression en amont de la cavité d'infusion, le segment de compression possédant une entrée dotée d'une profondeur supérieure ou égale à une profondeur d'une sortie du segment de compression, la profondeur de l'entrée et de la sortie du segment de compression se situant dans la plage de 0 à 2 mm ; et, le tout ou une partie du segment de compression étant positionné(e) à l'intérieur du premier module, et le tout ou une partie de la cavité d'infusion étant positionné(e) à l'intérieur du deuxième module.

13. Procédé selon la revendication 12, **caractérisé en ce que** le canal d'écoulement de résine et la cavité d'infusion communiquent par un intervalle (410) au niveau d'une partie de jonction des premier et deuxième modules dans la direction de passage des fibres, l'intervalle possédant une largeur dans la plage de 0,5 mm à 100 mm et une profondeur dans la plage de 0,5 mm à 50 mm.

14. Procédé selon la revendication 11, **caractérisé en ce que** le système d'imprégnation de fibres comprend en outre un segment d'assistance à l'imprégnation en aval de la cavité d'infusion, le segment d'assistance à l'imprégnation possédant une longueur dans la plage de 5 mm à 100 mm comportant une sortie possédant une profondeur dans la plage de 0 à 4 mm ; la profondeur d'une entrée du segment d'assistance à l'imprégnation étant supérieure ou égale à celle d'une sortie du segment d'assistance à l'imprégnation, et une section longitudinale du segment d'assistance à l'imprégnation dans la direction de passage des fibres étant effilée ou rectangulaire,
la profondeur de l'entrée et de la sortie du segment d'assistance à l'imprégnation indiquant respectivement la différence obtenue en soustrayant de l'épaisseur de la cavité de segment d'assistance à l'imprégnation l'épaisseur d'un extrudat produit par le système d'imprégnation dans une position correspondante de la cavité de segment d'assistance à l'imprégnation.

15. Procédé selon l'une quelconque des revendications 1 à 14, comprenant :
le séchage des fibres (7) avant que les fibres ne pénètrent dans le dispositif de pultrusion, et/ou la déshumidification de l'environnement autour des fibres de sorte à rendre l'humidité relative de l'environnement autour des fibres inférieure à 60 %.
